# EUROPÄISCHE PATENTANMELDUNG

(11) **EP 4 800 257 A1**
(43) Veröffentlichungstag der Anmeldung: **02.09.2026**
(21) Anmeldenummer: 26160765.9
(22) Anmeldetag: 25.02.2026
(51) Int. Cl.: F16C 17/24, B32B 7/12, F16C 33/20

(54) **GLEITLAGERVERBUNDWERKSTOFF MIT ELEKTRISCH LEITFÄHIGEN PARTIKELN UND VERFAHREN ZU SEINER HERSTELLUNG**

(30) Priorität: 26.02.2025 DE 102025107311
(71) Anmelder: KS Gleitlager GmbH, 68789 St. Leon-Rot (DE)
(72) Erfinder: Reinicke, Rolf, 76669 Bad Schönborn (DE); Bickle, Rüdiger, 68799 Reilingen (DE); Danz, Michael, 76344 Eggenstein-Leopoldshafen (DE); Küntzler, Boris, 76872 Steinweiler (DE); Wieland, Birgit, 68799 Reilingen (DE)
(74) Vertreter: DREISS Patentanwälte PartG mbB

(57) **Zusammenfassung**

Die Erfindung betrifft einen Gleitlagerverbundwerkstoff (10) umfassend eine Stützschicht (12), eine auf die Stützschicht aufgebrachte Gleitschicht (14) mit einer Verbindungsfläche (16) zur Stützschicht und einer gegenüberliegenden Gleitoberfläche (18), die Gleitschicht umfassend eine Gleitmaterialschicht (22) aus einem Gleitmaterial (24) auf Polymerbasis, eine zwischen Gleitmaterialschicht und Stützschicht angeordnete Klebeschicht (20) umfassend einen Epoxidharz-Klebstoff (26), und elektrisch leitfähige Partikel (28), welche die Gleitmaterialschicht und die Klebeschicht durchsetzen. Die Erfindung betrifft auch Verfahren zum Herstellen eines solchen Gleitlagerverbundwerkstoffs sowie ein Gleitlagerelement aus einem solchen Gleitlagerverbundwerkstoff.

## Beschreibung

Die Erfindung betrifft einen Gleitlagerverbundwerkstoff mit einer Stützschicht und einer darauf aufgebrachten Gleitmaterialschicht. Die Erfindung betrifft auch ein Gleitlagerelement aus einem solchen Gleitlagerverbundwerkstoff sowie ein Verfahren zum Herstellen eines solchen Gleitlagerverbundwerkstoffs.

Derartige Gleitlagerverbundwerkstoffe sind im Stand der Technik in vielfältiger Weise bekannt. Insbesondere sind Gleitlagerverbundwerkstoffe bekannt, bei denen auf der Stützschicht eine poröse Bronze-Schicht als Anbindungsschicht aufgebracht ist, in welche ein polymeres Gleitmaterial imprägniert ist. Ein solcher Gleitlagerverbundwerkstoff ist beispielsweise in der DE 10 2006 048 311 A1 beschrieben.

Es ist auch bekannt, ein Gleitmaterial mit der Stützschicht zu verkleben. Beispielsweise ist aus der EP 2 139 675 B1 ein Gleitlager, umfassend einen Metallträger und eine Gleitmaterialschicht bekannt, wobei der Metallträger und die Gleitmaterialschicht über eine Zwischenschicht aus einem funktionalisierten thermoplastischen Fluorpolymer gefügt sind. Solche Haftschichten auf Fluorpolymer-Basis sind jedoch aus Umweltschutzgründen zunehmend unerwünscht.

Aus der DE 10 2023 115 034 A1 ist zudem ein Gleitlagerverbundwerkstoff mit einer Stützschicht und einer polymeren Gleitmaterialschicht bekannt, wobei die Gleitmaterialschicht mittels einer Haftvermittler-Folie aus Polyethylen mit der Stützschicht gefügt ist.

Die bekannten Gleitlagerverbundwerkstoffe sind in der Regel in einer Richtung orthogonal zu einer Schichterstreckung elektrisch nicht leitfähig, da die polymeren Gleitmaterialien typischerweise elektrisch isolierend sind. Die fehlende elektrische Leitfähigkeit in dieser Richtung ist für viele Anwendungen akzeptabel. Es gibt jedoch Umstände, unter denen eine solche elektrische Leitfähigkeit von Vorteil ist. So kann ein Gleitlagerverbundwerkstoff beispielsweise für die Herstellung von Buchsen verwendet werden, die in den Scharnieren von Fahrzeugtüren eingesetzt werden. Durch die üblicherweise fehlende Leitfähigkeit orthogonal zu einer Schichterstreckung isolieren diese Buchsen dann die Tür vom Rest der Fahrzeugkarosserie, was beispielsweise beim kathodischen Tauchlackieren des Fahrzeugs zu Problemen bei der Lackierung führen kann.

Um eine elektrische Leitfähigkeit auch orthogonal zu einer Schichterstreckung bereitzustellen, ist es bekannt, in das Gleitmaterial eine größere Menge kleinerer leitfähiger Partikel einzulagern, sodass diese einander kontaktieren, um ein elektrisch leitfähiges Netzwerk zu bilden. Beispielsweise ist aus der WO 93/23682 A1 ein Gleitlagermaterial mit einer Stützschicht und einer Oberflächenschicht bekannt, wobei die Oberflächenschicht bis zu 20% Rußpartikel (Carbon Black) aufweist, welche ein elektrisch leitfähiges Netzwerk bilden.

Weiter ist aus der WO 2017/063807 A1 ein Gleitlager bekannt, mit einer Gleitmaterialschicht aus einem elektrisch isolierenden Material, wobei in die Gleitmaterialschicht Durchgangslöcher eingebracht werden, in die jeweils ein über eine Gleitfläche der Gleitmaterialschicht hinausragender Graphitpfosten eingebracht wird, um eine elektrisch leitfähige Verbindung herzustellen.

Aus der DE 10 2022 121 689 A1 ist zudem ein Gleitelement bekannt mit einem porösen metallischen Trägermaterial, bspw. aus gesinterter Bronze, aus Gewebe oder aus Streckmetall, in welches ein Gleitmaterial auf der Basis von PTFE oder thermoplastischem Kunststoff einimprägniert ist, sodass das Gleitmaterial in direktem Kontakt mit dem Trägermaterial ist. In das Gleitmaterial sind leitfähige Partikel eingebracht, die sich jeweils innerhalb der Gleitmaterialschicht von einer Grenzfläche mit dem Trägermaterial zu einer Gleitfläche erstrecken.

Die Erfindung beschäftigt sich mit der Aufgabe, einen elektrisch leitfähigen Gleitlagerverbundwerkstoff bereitzustellen, der einfach und kostengünstig herstellbar ist und zudem gute tribologische Eigenschaften aufweist.

Diese Aufgabe wird erfindungsgemäß durch einen Gleitlagerverbundwerkstoff mit den Merkmalen des Anspruchs 1, ein Verfahren mit den Merkmalen des Anspruchs 11, sowie ein Gleitlagerelement mit den Merkmalen des Anspruchs 15 gelöst.

Gemäß einem ersten Aspekt wird ein Gleitlagerverbundwerkstoff vorgeschlagen, umfassend eine Stützschicht und eine auf der Stützschicht aufgebrachte Gleitschicht. Die Gleitschicht weist eine mit der Stützschicht in Kontakt stehende Verbindungsfläche und eine gegenüberliegende Gleitoberfläche auf.

Die Gleitoberfläche bildet insbesondere die Kontaktfläche zu einem Reibpartner des Gleitlagerverbundwerkstoffs. Die Gleitschicht ist insbesondere an der Verbindungsfläche mit der Stützschicht verbunden. Die Gleitschicht weist insbesondere wenigstens zwei Teilschichten auf, welche übereinander angeordnet sind. Die Gleitschicht weist eine Gleitmaterialschicht aus einem, insbesondere elektrisch nicht leitfähigen, Gleitmaterial auf (im Stand der Technik wird gelegentlich die Gleitmaterialschicht als Gleitschicht bezeichnet). Die Gleitmaterialschicht, insbesondere das Gleitmaterial, bildet abschnittsweise die Gleitoberfläche. Insofern ist die Gleitoberfläche abschnittsweise durch die Gleitmaterialschicht bereitgestellt. Die Gleitschicht weist außerdem eine zwischen Gleitmaterialschicht und Stützschicht angeordnete Klebeschicht auf. Die Klebeschicht ist insbesondere unmittelbar auf die Stützschicht aufgebracht. Die Gleitmaterialschicht ist insbesondere unmittelbar auf die Klebeschicht aufgebracht. Insbesondere ist die Gleitmaterialschicht mittels der Klebeschicht mit der Stützschicht verbunden. Die Klebeschicht weist einen, insbesondere ausgehärteten, Epoxidharz-Klebstoff auf oder besteht daraus. Die Klebeschicht bildet abschnittsweise die Verbindungsfläche der Gleitschicht. Insofern ist die Verbindungsfläche abschnittsweise durch die Klebeschicht bereitgestellt. Die Gleitschicht weist außerdem elektrisch leitfähige Partikel auf. Die elektrisch leitfähigen Partikel sind jeweils derart ausgebildet und angeordnet, dass sie die Gleitmaterialschicht und die Klebeschicht, insbesondere in einer Richtung orthogonal zu einer Schichterstreckung, insbesondere vollständig, durchsetzen. Insbesondere bilden die elektrisch leitfähigen Partikel jeweils abschnittsweise die Verbindungsfläche und abschnittsweise die Gleitoberfläche. Die elektrisch leitfähigen Partikel erstrecken sich also insbesondere von der Stützschicht zu einer Gleitoberfläche des Gleitlagerverbundwerkstoffs. Dies schließt jedoch nicht aus, dass die Gleitschicht weitere elektrisch leitfähige Partikel aufweist, die diese Bedingungen nicht erfüllen, bspw. nicht die Verbindungsfläche und/oder nicht die Gleitoberfläche mit bilden.

Gemäß einem zweiten Aspekt wird ein Gleitlagerverbundwerkstoff vorgeschlagen, umfassend
eine, insbesondere metallische, Stützschicht, insbesondere aus Stahl oder einer Kupferlegierung,
eine, insbesondere unmittelbar, auf die Stützschicht aufgebrachte Klebeschicht umfassend einen, insbesondere ausgehärteten, Epoxidharz-Klebstoff,
eine, insbesondere unmittelbar, auf die Klebeschicht aufgebrachte Gleitmaterialschicht umfassend ein, insbesondere elektrisch nicht leitfähiges, Gleitmaterial, und
elektrisch leitfähige Partikel, welche die Gleitmaterialschicht und die Klebeschicht durchsetzen, sodass die elektrisch leitfähigen Partikel einerseits in Kontakt mit der Stützschicht sind und andererseits abschnittsweise eine Gleitoberfläche des Gleitlagerverbundwerkstoffs bilden.

Bei den vorgeschlagenen Gleitlagerverbundwerkstoffen ist insofern über die elektrisch leitfähigen Partikel eine direkte elektrische Verbindung zwischen Gleitoberfläche und Stützschicht bereitgestellt.

Dies ermöglicht es beispielsweise elektrische Ströme zwischen einem solchen Gleitlagerverbundwerkstoff und einem an der Gleitoberfläche anliegenden Gleitpartner zu übertragen. Dies kann beispielsweise bei einem Einsatz des Gleitlagerverbundwerkstoffs in einem Scharnier elektrostatische Aufladungen reduzieren. Zudem ist beispielsweise bei einem Einsatz des Gleitlagerverbundwerkstoffs in einem Türscharnier eines Autos eine kathodische Tauchlackierung vereinfacht. Dadurch, dass die elektrisch leitfähigen Partikel die Gleitschicht durchsetzen, ist eine direkte elektrische Verbindung zwischen Gleitoberfläche und Stützschicht bereitgestellt, was eine Leitfähigkeit verbessert - insbesondere im Vergleich zu bekannten Gleitlagerverbundwerkstoffen, bei denen dem Gleitmaterial eine Vielzahl kleinerer Partikel beigemischt wird (dort üblicherweise hochohmige Grenzflächen zwischen den kleineren Partikeln). Zudem ermöglicht es die vorgeschlagene Ausgestaltung einen Partikelanteil vergleichsweise gering zu halten, was sich positiv auf die tribologischen Eigenschaften der Gleitschicht auswirkt und zudem einen Materialverbrauch reduziert.

Insbesondere sind die elektrisch leitfähigen Partikel jeweils derart ausgebildet und angeordnet, dass über einen jeweiligen elektrisch leitfähigen Partikel eine (direkte) elektrische Verbindung zwischen Gleitoberfläche und Stützschicht hergestellt ist.

Die Gleitschicht kann weitere (Teil-)Schichten aufweisen. Insbesondere besteht die Gleitschicht aus der Klebeschicht, der Gleitmaterialschicht und den elektrisch leitfähigen Partikeln. Die Gleitoberfläche der Gleitschicht ist insbesondere durch das Gleitmaterial und die elektrisch leitfähigen Partikel gebildet. Die Verbindungsfläche der Gleitschicht ist insbesondere durch den Epoxidharz-Klebstoff und die elektrisch leitfähigen Partikel gebildet.

Es erweist sich als vorteilhaft, wenn eine mittlere Partikeldichte der elektrisch leitfähigen Partikel an der Gleitoberfläche (d.h. eine Anzahl derjenigen elektrisch leitfähigen Partikel, die die Gleitoberfläche mit bilden) zwischen 1 und 100 Partikel pro 100 mm² Gleitoberfläche, vorzugsweise zwischen 1 und 50 Partikel pro 100 mm² Gleitoberfläche, weiter vorzugsweise zwischen 2 und 30 Partikel pro 100 mm² Gleitoberfläche, beträgt. Insbesondere hat sich herausgestellt, dass bei einer Partikeldichte kleiner 1 pro 100 mm² Gleitoberfläche eine elektrische Leitfähigkeit zwischen Gleitoberfläche und Stützschicht nicht hinreichend ausgebildet ist, bei einer Partikeldichte größer 100 Partikel pro 100 mm² Gleitoberfläche sich die elektrisch leitfähigen Partikel jedoch zunehmend negativ auf die tribologischen Eigenschaften der Gleitschicht auswirken.

Die Partikeldichte kann insbesondere durch lichtmikroskopische oder elektronenmikroskopische Analyse der Gleitoberfläche bestimmt werden. Beispielhaft kann die mittlere Partikeldichte dadurch bestimmt werden, dass von zumindest fünf verschiedenen Messbereichen (bspw. von je 20 mm X 20 mm Abmessung) der Gleitoberfläche eine lichtmikroskopische Aufnahme (z.B. bei einer 10-fachen Vergrößerung) gemacht wird, die Anzahl der Partikel, die innerhalb des jeweiligen Messbereichs an der Gleitoberfläche liegen, gezählt wird, und die ermittelte Anzahl der Partikel durch die Fläche des entsprechenden Messbereichs geteilt wird. Aus den Partikeldichten der jeweiligen Messbereiche kann dann ein Mittelwert gebildet werden.

Es erweist sich als vorteilhaft, wenn ein Volumenanteil der elektrisch leitfähigen Partikel bezogen auf das Gesamtvolumen der Gleitschicht 0,01 - 1,0 Vol.-%, vorzugsweise 0,02 - 0,5 Vol.-%, weiter vorzugsweise 0,03 - 0,2 Vol.-%, beträgt. Der Anteil der elektrisch leitfähigen Partikel ist insofern vergleichsweise gering, insbesondere im Vergleich zu bekannten Lösungen, bei denen Partikel, welche wesentlich kleiner als eine Schichtdicke sind, zugegeben werden. Auf diese Weise werden die tribologischen Eigenschaften der Gleitschicht nur geringfügig beeinflusst. Dennoch ist eine hinreichende elektrische Leitfähigkeit bereitgestellt.

Vorzugsweise handelt es sich bei den elektrisch leitfähigen Partikeln um Metallpartikel, d.h. aus einem Metall oder einer Metalllegierung hergestellte Partikel. Metallpartikel haben sich als vorteilhaft herausgestellt, da sie einerseits eine besonders hohe elektrische Leitfähigkeit bei geringer chemischer Reaktivität aufweisen und andererseits vergleichsweise gute Gleiteigenschaften aufweisen. Besonders bevorzugt handelt es sich bei den elektrisch leitfähigen Partikeln um Bronzepartikel, Messingpartikel oder Aluminiumpartikel.

Es erweist sich als vorteilhaft, wenn die elektrisch leitfähigen Partikel aus einem Material, insbesondere Metall oder Metalllegierung, mit einer Fließgrenze R_{P0,2} (gelegentlich auch als Streckgrenze R_{P0,2} oder Dehngrenze R_{P0,2} bezeichnet) von 120 - 240 MPa, vorzugsweise von 140 - 200 MPa hergestellt sind. Derartige Partikel haben sich als vorteilhaft herausgestellt, da sie eine Herstellung begünstigen (siehe unten), aber dennoch formstabil in einer Anwendung des Gleitlagerverbundwerkstoffs sind.

Weiter erweist es sich als vorteilhaft, wenn die elektrisch leitfähigen Partikel eine Oberflächenhärte von 70 - 150 HV0,05 (Vickers-Härte 0,05), vorzugsweise 80 -140 HV0,05, aufweisen. Es hat sich gezeigt, dass Partikel mit einer solchen Oberflächenhärte einerseits eine ausreichend große Härte aufweisen, um bei der Herstellung zuverlässig in die Gleitmaterialschicht einzudringen, und andererseits die Reibeigenschaften der Gleitschicht nur geringfügig zu beeinflussen.

Weiter erweist es sich als vorteilhaft, wenn der (ausgehärtete) Epoxidharz-Klebstoff eine Bruchdehnung von mehr als 10% und weniger als 60%, insbesondere von mehr als 15% und weniger als 50%, aufweist. Weiter erweist es sich als vorteilhaft, wenn der (ausgehärtete) Epoxidharz-Klebstoff ein Elastizitätsmodul von weniger als 2000 MPa und mehr als 200 MPa, insbesondere von weniger als 1500 MPa und mehr als 400 MPa, weiter insbesondere von weniger als 1000 MPa und mehr als 500 MPa, aufweist. Ein Gleitlagerverbundwerkstoff mit solchem Epoxidharz-Klebstoff zeichnet sich durch eine gute Weiterverarbeitbarkeit aus und weist zudem optimierte mechanische und thermische Eigenschaften auf. Insbesondere hat sich herausgestellt, dass durch die Verwendung eines zuvor beschriebenen Epoxidharz-Klebstoffs mit für Epoxidharz-Klebstoffe ungewöhnlich hoher Bruchdehnung und geringem E-Modul eine verbesserte Umformbarkeit des Gleitlagerverbundwerkstoffs erzielt werden kann, was bspw. eine Herstellung von Gleitlagerbuchsen, insbesondere Gleitlagerbundbuchsen, oder Gleitlagerschalen verbessert. Gleichzeitig konnten durch die Verwendung eines Epoxidharz-Klebstoffs mit den erfindungsgemäßen Eigenschaften verbesserte Dämpfungseigenschaften des Gleitlagerverbundwerkstoffs erzielt werden. Durch den vorgeschlagenen Verbund wird zudem ein Spannungsausgleich zwischen Stützschicht und Gleitschicht bei temperaturinduzierten Spannungen begünstigt, was einen robusten Einsatz des Gleitlagerverbundwerkstoffs auch bei wechselnder Temperaturbelastung begünstigt. Darüber hinaus hat sich herausgestellt, dass der erfindungsgemäße Gleitlagerverbundwerkstoff besonders widerstandfähig gegenüber scherenden mechanischen Verformungen ist, insbesondere auch bei Gleitmaterialien mit Füllstoffen. Dies wird insbesondere darauf zurückgeführt, dass durch die vergleichsweise hohe Bruchdehnung des Epoxidharz-Klebstoffs dieser beim Schälvorgang bis zu einem hohen Grad mitverformt werden kann und somit die Kraft beim Schälvorgang auf eine größere Fläche verteilt ist. Im Vergleich zu Klebeschichten auf Polyethylen-Basis weist der erfindungsgemäße Gleitlagerverbundwerkstoff mit Epoxidharz-Klebstoff zudem eine höhere Temperaturbeständigkeit auf.

Die Bruchdehnung (gelegentlich auch als Reißdehnung bezeichnet) und das Elastizitätsmodul (E-Modul) sind insbesondere in einem Zugversuch nach DIN EN ISO 527 (mit einer Zuggeschwindigkeit von 2 mm/min) bestimmt.

Der Epoxidharz-Klebstoff ist insbesondere ein ausgehärteter Epoxidharz-Klebstoff. Bei der vorstehend beschriebenen Bruchdehnung und dem vorstehend beschriebenen Elastizitätsmodul handelt es sind insofern um Eigenschaften des Epoxidharz-Klebstoffes im ausgehärteten Zustand.

Die vorstehend beschriebenen Gleitlagerverbundwerkstoffe können insbesondere als Gleitlagerelement eingesetzt werden. Gemäß einem dritten Aspekt wird insofern auch ein Gleitlagerelement vorgeschlagen, welches aus einem Gleitlagerverbundwerkstoff der vorstehend beschriebenen Arten hergestellt ist oder einen solchen aufweist. Bei dem Gleitlagerelement kann es sich beispielsweise um eine Gleitleiste, einen Gleitschuh, ein Gleitkissen, eine Gleitlagerschale, eine Gleitlagerbuchse oder - bundbuchse handeln. Mögliche Anwendungsgebiete umfassen unter anderem Sitzhöhenversteller für einen Sitz, (Tür)Scharniere, Front- und Heckklappenscharniere, Riemenspanner, Anlaufscheiben, Proportionalventile, Pedaleinrichtungen, Lenksysteme, Hochspannungsschutz ("HVC"), sowie Fahrräder, insbesondere Federgabeln und Dämpfer. Insofern wird auch ein Scharnier, insbesondere Türscharnier oder Front- oder Heckklappenscharnier, umfassend einen vorstehend beschriebenen Gleitlagerverbundwerkstoff, insbesondere umfassend ein Gleitlagerelement umfassend einen vorstehend beschriebenen Gleitlagerverbundwerkstoff, vorgeschlagen. Weiter wird ein Sitzhöhenversteller für einen Sitz, ein Riemenspanner, eine Anlaufscheibe, ein Proportionalventil, eine Pedaleinrichtung, ein Lenksystem, ein Hochspannungsschutz ("HVC"), eine Federgabeln für ein Fahrrad sowie ein Dämpfer für ein Fahrrad, jeweils umfassend einen vorstehend beschriebenen Gleitlagerverbundwerkstoff vorgeschlagen.

Gemäß einem vierten Aspekt wird ein Verfahren zum Herstellen eines Gleitlagerverbundwerkstoffs, insbesondere eines vorstehend beschriebenen Gleitlagerverbundwerkstoffs, vorgeschlagen. Das Verfahren umfasst insbesondere zunächst das Bereitstellen einer, insbesondere metallischen, Stützschicht, das Bereitstellen einer Gleitmaterial-Folie aus einem Gleitmaterial, das Bereitstellen eines aushärtbaren, insbesondere wärmeaushärtbaren, Epoxidharz-Klebstoffes sowie das Bereitstellen von elektrisch leitfähigen Partikeln, insbesondere Metallpartikeln, insbesondere in Form eines Pulvers oder einer Pulvermischung. Gemäß dem Verfahren wird zunächst eine Zwischenschicht umfassend Epoxidharz-Klebstoff und elektrisch leitfähige Partikel auf die Stützschicht und/oder auf die die Gleitmaterial-Folie aufgetragen, bspw. gerakelt. Vorzugsweise wird die Zwischenschicht auf die Stützschicht aufgetragen. Die Zwischenschicht kann durchgehend sein. Die Zwischenschicht kann auch aus mehreren Segmenten bestehen. In einem weiteren Schritt werden sodann die Gleitmaterial-Folie (mit optional darauf aufgetragener Zwischenschicht) und die Stützschicht (mit optional darauf aufgetragener Zwischenschicht) miteinander verbunden, insbesondere unter Aushärtung des Epoxidharz-Klebstoffs. Hierzu werden vorzugsweise zunächst die Gleitmaterial-Folie (mit optional darauf aufgetragener Zwischenschicht) und die Stützschicht (mit optional darauf aufgetragener Zwischenschicht) derart angeordnet, insbesondere aufeinandergelegt, dass die Zwischenschicht (d.h. die Schicht aus Epoxidharz-Klebstoff und die elektrisch leitfähigen Partikel) zwischen der Stützschicht und der Gleitmaterial-Folie angeordnet ist. Sodann werden die Gleitmaterial-Folie und die Stützschicht mit der dazwischenliegenden Zwischenschicht aus Epoxidharz-Klebstoff und elektrisch leitfähigen Partikeln, insbesondere unter Wärmezufuhr, weiter insbesondere unter zumindest teilweiser Aushärtung des Epoxidharz-Klebstoffs, verpresst, bspw. in einer Heißpresse oder Walze. Das Verpressen erfolgt derart, dass sich die elektrisch leitfähigen Partikel in die Gleitmaterial-Folie und den Epoxidharz-Klebstoff derart eindrücken, dass zumindest ein Anteil der elektrisch leitfähigen Partikel den Epoxidharz-Klebstoff und die Gleitmaterial-Folie durchsetzt (d.h. sich durch die Schicht aus Epoxidharz-Klebstoff und durch die Gleitmaterial-Folie erstreckt), insbesondere sodass dieser Anteil der elektrisch leitfähigen Partikel einerseits die Stützschicht kontaktiert und andererseits abschnittsweise eine Gleitoberfläche des Gleitlagerverbundwerkstoffes bildet. Insbesondere wird zumindest ein Anteil der elektrisch leitfähigen Partikel durch die Gleitmaterial-Folie durchgedrückt.

Das vorgeschlagene Verfahren ermöglicht es auf besonders einfache Weise Gleitlagerverbundwerkstoffe mit elektrisch leitfähiger Verbindung zwischen einer Gleitoberfläche des Gleitlagerverbundwerkstoffs und der Stützschicht herzustellen. Insbesondere ist das Verfahren einfach skalierbar und in einem kontinuierlichen Prozess umsetzbar, was eine kostengünstige Herstellung von Gleitlagerverbundwerkstoffen ermöglicht. Dadurch, dass sich die elektrisch leitfähigen Partikel im Zuge des Press- oder Walzvorgangs in die Gleitmaterial-Folie eindrücken, ist es nicht erforderlich, in eine Gleitschicht zunächst Aussparungen einzubringen und dann in diese Aussparungen leitfähige Elemente einzuführen. Zudem wird durch das lediglich lokale Eindringen der Partikel in die Gleitmaterial-Folie eine Gleiteigenschaft des Gleitmaterials nur geringfügig gestört.

Das Aufbringen der Zwischenschicht aus Epoxidharz-Klebstoff und elektrisch leitfähigen Partikeln kann auf unterschiedliche Weise erfolgen.

Im Rahmen einer ersten Ausgestaltung kann zunächst eine Schicht aus dem Epoxidharz-Klebstoff auf die Stützschicht und/oder auf die Gleitmaterial-Folie, vorzugsweise auf die Stützschicht, aufgetragen werden. In einem weiteren Schritt können sodann die elektrisch leitfähigen Partikel auf die Schicht aus dem Epoxidharz-Klebstoff aufgebracht werden, insbesondere derart, dass eine Partikeldichte 1 bis 100, vorzugsweise 1 bis 50, weiter vorzugsweise 2 bis 30, Partikel pro 100 mm² Epoxidharz-Klebstoff beträgt. In vorteilhafter Weise werden die elektrisch leitfähigen Partikel auf den Epoxidharz-Klebstoff aufgestreut.

Im Rahmen einer zweiten Ausgestaltung kann zunächst eine Klebstoffzusammensetzung umfassend Epoxidharz-Klebstoff und darin dispergierte elektrisch leitfähige Partikel bereitgestellt werden. In einem weiteren Schritt kann sodann eine Schicht aus der Klebstoffzusammensetzung auf die Stützschicht und/oder auf die Gleitmaterial-Folie aufgetragen werden.

Das Verpressen kann mit einer Presse, insbesondere Heißpresse, erfolgen. Das Verpressen kann auch mit einer Walzvorrichtung erfolgen.

Es erweist sich als vorteilhaft, wenn das Verpressen bei einer Temperatur zwischen 190°C und 230°C, vorzugsweise zwischen 200°C und 220°C, erfolgt. In diesem Temperaturbereich wird das Eindringen der Partikel in das Gleitmaterial begünstigt, insbesondere bei einer Ausgestaltung des Gleitmaterials auf Polyamid-Basis oder UHMW-PE-Basis, ohne jedoch das Gleitmaterial strukturell zu schädigen.

Weiter erweist es sich als vorteilhaft, wenn das Verpressen derart erfolgt, dass zumindest eine Teilmenge der elektrisch leitfähigen Partikel plastisch verformt wird. Auf diese Weise kann einerseits ein verbesserter elektrischer Kontakt zwischen Stützschicht und Partikel hergestellt werden. Zudem kann auf diese Weise eine besonders homogene Gleitoberfläche bereitgestellt werden.

Beim Verpressen werden vorzugsweise die Zwischenschicht (umfassend Epoxidharz-Klebstoff und elektrisch leitfähige Partikel) und die Gleitmaterial-Folie auf eine gewünschte Zielschichtdicke (der späteren Gleitschicht) komprimiert. Beispielsweise ist es denkbar, dass das Verpressen mittels einer Walzvorrichtung erfolgt. Dann kann eine Zielschichtdicke durch eine Höhe des Walzspalts definiert sein. Bei Verwendung einer Heißpresse mit einem Pressstempel wird die Zielschichtdicke insbesondere durch eine Endposition des Pressstempels definiert.

Es hat sich als vorteilhaft herausgestellt, wenn eine mittlere Partikelgröße d50 der bereitgestellten elektrisch leifähigen Partikel (d.h. vor dem Verpressen) gleich oder größer, vorzugsweise größer, als die Zielschichtdicke der Gleitschicht ist. Auf diese Weise kann sichergestellt werden, dass zumindest ein Großteil der aufgestreuten Partikel im fertigen Produkt die Schicht aus dem Epoxidharz-Klebstoff und das Gleitmaterial vollständig durchsetzt. Partikel größer als eine Zielschichtdicke können dann im Zuge des Verpressens auf die Zielschichtdicke zusammengedrückt (plastisch verformt) werden.

Als besonders vorteilhaft hat es sich herausgestellt, wenn die mittlere Partikelgröße d50 zwischen 100% und 130%, vorzugsweise zwischen 105% und 120%, der Zielschichtdicke der Gleitschicht beträgt. Insofern kann eine mittlere Partikelgröße d50 der leifähigen Partikel zwischen 0 und 30%, vorzugsweise zwischen 5 und 20%, größer als die Zielschichtdicke der Gleitschicht sein.

Der d50-Wert (volumenbasierter Median der Partikelgrößenverteilung) kann mittels Laserbeugung bestimmt werden, beispielsweise gemäß ISO 13320:2020-1.

Vorzugsweise weisen die bereitgestellten elektrisch leitfähigen Partikel eine Partikelgrößenverteilung derart auf, dass maximal 20 Gew.-% der elektrisch leitfähigen Partikel kleiner als die Zielschichtdicke sind. Vorzugsweise sind maximal 10 Gew.-% der elektrisch leitfähigen Partikel größer als 130% der Zielschichtdicke. Durch Verwendung derartiger Partikel kann einerseits verhindert werden, dass zu viele zu kleine Partikel vorliegen, die nicht effektiv zur elektrischen Leitfähigkeit beitragen können, da sie die Gleitschicht nicht vollständig durchsetzen können (aber unter Umständen die tribologischen Eigenschaften der Gleitschicht verändern). Andererseits kann verhindert werden, dass zu viele zu große Partikel vorliegen, die stark verformt werden müssten und dabei gegebenenfalls eine Integrität der Gleitmaterial-Folie stören würden.

Wie vorstehend erwähnt, handelt es sich bei den elektrisch leitfähigen Partikeln vorzugsweise um Metallpartikel, insbesondere aus Bronze, Messing oder Aluminium.

Weiter erweist es sich als vorteilhaft, wenn die elektrisch leitfähigen Partikel aus einem Material, insbesondere Metall oder Metalllegierung, mit einer Fließgrenze R_{P0,2} von 120 - 240 MPa, vorzugsweise von 140 - 200 MPa hergestellt sind. Derartige Partikel haben sich als besonders vorteilhaft für eine Herstellung des Gleitlagerverbundwerkstoffs herausgestellt, da die genannten Materialien eine plastische Verformung während des Verpressens begünstigen, aber dennoch formstabil in einer Anwendung des Gleitlagerverbundwerkstoffs sind.

Weiter erweist es sich als vorteilhaft, wenn die elektrisch leitfähigen Partikel eine Oberflächenhärte von 70 - 150 HV0,05 (=Vickers-Härte 0,05), vorzugsweise 80 -140 HV0,05, aufweisen. Es hat sich gezeigt, dass Partikel mit einer solchen Oberflächenhärte einerseits eine ausreichend große Härte aufweisen, um zuverlässig die Gleitmaterial-Folie durchdringen zu können, aber andererseits die Reibeigenschaften der Gleitschicht nur geringfügig zu beeinflussen.

Der bereitgestellte Epoxidharz-Klebstoff ist insbesondere derart aushärtbar, vorzugswiese wärmeaushärtbar, ausgebildet, dass er nach dem Aushärten eine Bruchdehnung von über 10% und weniger als 60%, insbesondere über 15% und weniger als 50%, und ein Elastizitätsmodul von weniger als 2000 MPa und mehr als 200 MPa, insbesondere von weniger als 1000 MPa und mehr als 500 MPa, aufweist.

Die elektrische leitfähigen Partikel können unterschiedliche Form und Geometrie aufweisen. Die elektrisch leitfähigen Partikel können regelmäßig oder unregelmäßig geformt sein.

Vorzugsweise sind die bereitgestellten elektrisch leitfähigen Partikel kugelig, insbesondere sphärisch, ausgebildet, wobei kugelig oder sphärisch auch im Wesentlichen kugelig oder im Wesentlichen sphärisch umfasst. Kugelige, insbesondere sphärische, Partikel haben sich als besonders vorteilhaft herausgestellt, da sie einerseits im Zuge des Verpressens nicht umknicken können, wie beispielsweise bei stark anisotropen Partikeln wie Fasern. Andererseits ist ein Verformen der Partikel erleichtert, da nur wenig Material verformt werden muss.

Die elektrisch leitfähigen Partikel können durch Zerkleinern eines Vollmaterials bereitgestellt sein (bspw. Pulver). Die elektrisch leitfähigen Partikel können auch aus einem Ausgangsmaterial, bspw. Metallschmelze, urgeformt sein.

Gemäß einem fünften Aspekt wir ein Verfahren zum Herstellen eines Gleitlagerelements, bspw. einer Gleitlagerbundbuchse, aus einem vorstehend beschriebenen Gleitlagerverbundwerkstoff vorgeschlagen. Das Verfahren umfasst insbesondere das Herstellen eines Gleitlagerverbundwerkstoffs gemäß dem vierten Aspekt und das anschließende Umformen des Gleitlagerverbundwerkstoffs, insbesondere unter Bildung des Gleitlagerelements (bspw. der Gleitlagerbundbuchse.

Gemäß einer Weiterbildung des Verfahrens gemäß dem fünften Aspekt kann der Epoxidharz-Klebstoff vor dem Umformen nur teilweise ausgehärtet werden, dann umgeformt werden und erst nach dem Umformen der Epoxidharz-Klebstoff vollständig ausgehärtet werden. Auf diese Weise können Spannungsrisse beim Umformen weiter reduziert werden.

Die vorstehend in Bezug auf den Gleitlagerverbundwerkstoff beschriebenen Vorteile und optionalen Merkmale können auch zur Ausgestaltung der Verfahren gemäß dem vierten und fünften Aspekt dienen, sodass zur Vermeidung von Wiederholungen auf vorstehende Offenbarung hierzu verwiesen wird.

Die nachfolgend beschriebenen optionalen Merkmale und Vorteile können zur Ausgestaltung aller Aspekte dienen:
Die Stützschicht ist vorzugsweise eine metallische Stützschicht. Vorteilhafte Materialien der Stützschicht umfassen Stahl, insbesondere Edelstahl, beschichteter Stahl, insbesondere verzinkter Stahl, geschliffener Stahl, Aluminium, Aluminiumlegierung, Bronze und Messing. Bevorzugt ist die Stützschicht aus Stahl, insbesondere aus geschliffenem oder beschichtetem, vorzugsweise verzinktem, Stahl.

Die Stützschicht kann als Flachmaterial, bspw. in Form eines Bandes bereitgestellt sein. Die Stützschicht kann auch als dreidimensionaler Formkörper bereitgestellt sein. Insofern kann die Stützschicht ein Träger, insbesondere Metallträger, sein.

Der Epoxidharz-Klebstoff kann ein Zwei-Komponenten-Klebstoff (2K-Klebstoff) sein. Vorzugsweise ist der Epoxidharz-Klebstoff aber ein Ein-Komponenten-Klebstoff (1K-Klebstoff). Auf diese Weise ist eine Applikation des Epoxidharz-Klebstoffes vereinfacht.

Der Epoxidharz-Klebstoff umfasst insbesondere ein Epoxidharz und einen Härter. Als vorteilhaft hat es sich herausgestellt, wenn - bezogen auf ein Gesamtgewicht des Epoxidharz-Klebstoffs - ein Anteil des Epoxidharzes an dem Epoxidharz-Klebstoff 15-50 Gew.-% beträgt.

Das Epoxidharz kann beispielsweise ausgewählt sein aus der Gruppe umfassend Bisphenol A, Bisphenol-F, Semisolid-Epoxidharze, Epoxid-Novolake, insbesondere Phenol- oder Kresol-Epoxid-Novolake, und Diglycidylether, insbesondere von Bisphenol-A (DGEBA), von Bisphenol-F sowie von Bisphenol-A/F. Der Härter kann beispielsweise ausgewählt sein aus der Gruppe bestehend aus Dicyandiamid, Guanidine, Anhydride von mehrwertigen Carbonsäuren, Dihydrazide und Aminoguanidine, sowie deren Derivaten, wobei Dicyandiamid bevorzugt ist.

Der Epoxidharz-Klebstoff kann weitere Komponenten umfassen, insbesondere ausgewählt aus der Gruppe umfassend Reaktivverdünner, Härter-Beschleuniger, Feuchtigkeitsfänger, Füllstoffe, Modifikatoren, insbesondere Schlagzähmodifikatoren, und Kombinationen davon. Der Härter-Beschleuniger kann beispielsweise ausgewählt sein aus der Gruppe bestehend aus substituierten Harnstoffen, Imidazolen, Imidazolinen und Amin-Komplexen. Die Füllstoffe können beispielsweise ausgewählt sein aus der Gruppe bestehend aus Wollastonit, Calciumcarbonat, Calciumoxid, Farbpigmenten, insbesondere Ruß, und pyrogene Kieselsäuren, insbesondere Calciumcarbonat, Calciumoxid und pyrogene Kieselsäuren.

Vorzugsweise umfasst der Epoxidharz-Klebstoff zumindest einen Schlagzähmodifikator. Es ist grundsätzlich bekannt, dass durch Veränderung eines Anteils des Schlagzähmodifikators am Epoxidharz-Klebstoff die mechanischen Eigenschaften des Epoxidharz-Klebstoffes eingestellt werden können, insbesondere mit erhöhtem Anteil an Schlagzähmodifikator das E-Modul verringert und die Bruchdehnung erhöht werden kann. Als Schlagzähmodifikator kann insbesondere ein endständig blockiertes Polyurethanpolymer verwendet werden.

Das Gleitmaterial ist insbesondere ein Gleitmaterial auf Polymerbasis. Insofern kann das Gleitmaterial überwiegend aus einem Polymer oder einer Polymermischung bestehen.

Das Gleitmaterial kann aus einem Polymer oder einer Polymermischung bestehen.

Das Gleitmaterial kann Füllstoffe aufweisen. Die Polymerbasis kann dann insbesondere eine (Polymer)matrix bilden, in welcher die Füllstoffe dispergiert sind. Insbesondere sind die Füllstoffe zumindest abschnittsweise in die Polymerbasis eingebettet. Die Füllstoffe sind insbesondere derart ausgebildet, dass sie die tribologischen Eigenschaften des Gleitmaterials beeinflussen, insbesondere verbessern. Insbesondere ist das Gleitmaterial ein Gleitmaterial auf Polymerbasis mit die tribologischen Eigenschaften verbessernden Füllstoffen. Insbesondere können die Füllstoffe Festschmierstoffe und/oder Hartpartikel umfassen.

Das Gleitmaterial ist vorzugsweise PFAS-frei, d.h. frei von per- und polyfluorierten Chemikalien. Insbesondere enthält das Gleitmaterial keine Fluorpolymere. Auf diese Weise ist eine besonders umweltfreundliche Herstellung und Entsorgung begünstigt. Insbesondere ist der Gleitlagerverbundwerkstoff PFAS-frei.

Vorzugsweise enthält das Gleitmaterial, insbesondere die Polymerbasis, einen thermoplastischen Kunststoff oder besteht daraus. Besonders vorteilhafte Kunststoffe sind ausgewählt aus der Gruppe bestehend aus Polyamid, Polyethylen, PEEK, PPA, PPS, POM und Mischungen daraus.

Vorzugsweise ist das Gleitmaterial ein Gleitmaterial auf Polyamid-Basis oder ein Gleitmaterial auf Polyethylen-Basis, insbesondere UHMW-PE-Basis.

Im Rahmen einer ersten vorteilhaften Realisierungsform des Gleitmaterials kann das Gleitmaterial ein Gleitmaterial auf Polyamid-Basis sein. Polyamid weist vorteilhafte Reibeigenschaften auf und begünstigt gerade in Kombination mit dem Epoxidharz-Klebstoff ein gut umformbaren und widerstandsfähigen Gleitlagerverbundwerkstoff.

Der Begriff "Polyamid-Basis" bzw. "Polyamidmatrix" bedeutet nicht zwingend, dass die gesamte Polymerbasis bzw. Polyamidmatrix aus Polyamid (eines Typs oder Mischung aus verschiedenen Polyamiden) bestehen muss. Vorzugsweise besteht die Polyamid-Basis aber zu mindestens 80,0 Gew.-%, weiter insbesondere mindestens 90,0 Gew.-%, weiter insbesondere mindestens 95,0 Gew.-% aus Polyamid (eines Typs oder Mischung aus verschiedenen Polyamiden).

Besonders vorteilhaft ist es, wenn die Polyamid-Basis (zu 100 %) aus Polyamid besteht. Dies schließt nicht aus, dass die Polyamid-Basis unerwünschte Verunreinigungen aufweist, insbesondere bis zu 1,0 Gew.-%, vorzugsweise bis zu 0,5 Gew.-%, weiter vorzugsweise bis zu 0,2 Gew.-%.

Die Polyamid-Basis oder der Polyamid-Anteil der Polyamid-Basis kann aus Polyamid eines Typs bestehen, insbesondere aus Polyamid 46 (nachfolgend PA46) oder Polyamid 6 (nachfolgend PA6), vorzugsweise PA6.

Die Polyamid-Basis oder der Polyamid-Anteil der Polyamid-Basis kann auch aus einer Mischung von verschiedenen Polyamiden bestehen.

Vorteilhafte Polyamid-Typen umfassen PA46, PA6, PA66, PA610, PA612, PA12. Insofern kann die Polyamid-Basis PA46, PA6, PA66, PA610, PA612, PA12 oder Kombinationen hiervon enthalten oder daraus bestehen.

Vorzugsweise umfasst die Polyamid-Basis oder der Polyamid-Anteil der Polyamid-Basis PA6 und wenigstens ein weiteres von PA6 verschiedenes Polyamid, insbesondere PA46 und/oder PA66. Besonders bevorzugt besteht die Polyamid-Basis aus einer Mischung aus PA6 und PA66.

Insbesondere beträgt der Anteil der Polyamid-Basis am Gleitmaterial mindestens 60 Gew.-%, insbesondere mindestens 65 Gew.-%, weiter insbesondere mindestens 70 Gew.-%, weiter insbesondere mindestens 75 Gew.-%, weiter insbesondere mindestens 80 Gew.-%.

Gemäß einer vorteilhaften Weiterbildung der ersten Realisierungsform kann das Gleitmaterial auf Polyamid-Basis Polyethylen mit einer mittleren Molaren Masse von wenigstens 0,5 Millionen g/mol, insbesondere von wenigstens 1 Millionen g/mol, weiter insbesondere von wenigstens 1,5 Millionen g/mol, weiter insbesondere von wenigstens 2,0 Millionen g/mol, als Füllstoff aufweisen.

Vorzugweise beträgt der Anteil an Polyethylen am Gleitmaterial 2 bis 25 Gew.-%, insbesondere 17,5 bis 22,5 Gew.-%, weiter insbesondere 20 Gew.-% (bezogen auf ein Gesamtgewicht des Gleitmaterials).

Eine erstes vorteilhaftes Gleitmaterial gemäß der ersten Realisierungsform umfasst (Angaben jeweils bezogen auf ein Gesamtgewicht des Gleitmaterials):
- 15 bis 25 Gew.-%, insbesondere 17,5 bis 22,5 Gew.-%, vorzugsweise 20 Gew.-%, Polyethylen mit einer mittleren Molaren Masse von wenigstens 0,5 Millionen g/mol als Füllstoff und
- gegebenenfalls bis zu 5 Gew.-% Pigmente;
- Rest Polyamid-Basis, insbesondere Polyamid, vorzugsweise aufweisend oder bestehend aus PA6.

Ein zweites vorteilhaftes Gleitmaterial gemäß der ersten Realisierungsform umfasst (Angaben jeweils bezogen auf ein Gesamtgewicht des Gleitmaterials):
- 2 bis 20 Gew.-%, insbesondere 2 bis 15 Gew.-%, weiter insbesondere 5 bis 15 Gew.-%, weiter insbesondere 5 bis 10 Gew.-%, Polyethylen mit einer mittleren Molaren Masse von wenigstens 0,5 Millionen g/mol als Füllstoff;
- 2 bis 25 Gew.-%, insbesondere 5 bis 25 Gew.-%, weiter insbesondere 10 bis 20 Gew.-%, wenigstens eines weiteren Füllstoffs,
   wobei der wenigstens eine weitere Füllstoff ausgewählt ist aus der Gruppe umfassend: Bariumsulfat (BaSO₄), Calciumphosphat, Metallsulfid, insbesondere SnS₂ und/oder WS₂, Festschmierstoff, vorzugsweise Graphit, und Kombinationen davon;
- gegebenenfalls bis zu 5 Gew.-% Pigmente.

Bei einem solchen Gleitmaterial beträgt ein Verhältnis der Gewichtsanteile des weiteren Füllstoffs oder der Summe der weiteren Füllstoffe zu Polyethylen vorzugsweise 3:1 bis 1:1, insbesondere 2:1.

Das zweite vorteilhafte Gleitmaterial kann - als weiteren Füllstoff - Calciumphosphat und/oder mindestens ein Metallsulfid, insbesondere eine Mischung aus Calciumphosphat, WS₂ und SnS₂, umfassen. Dabei beträgt der Anteil Calciumphosphat, der Anteil Metallsulfid, oder der Anteil einer Mischung aus Calciumphosphat und Metallsulfid, insbesondere der Mischung aus Calciumphosphat, WS₂ und SnS₂, maximal 15,0 Gew.-%, vorzugsweise maximal 10,0 Gew.-%, weiter vorzugsweise maximal 7,0 Gew.-%, weiter vorzugsweise maximal 5,0 Gew.-%. Insbesondere beträgt der Anteil Calciumphosphat, der Anteil Metallsulfid, oder der Anteil einer Mischung aus Calciumphosphat und Metallsulfid, insbesondere der aus Calciumphosphat, WS₂ und SnS₂, 1,0 - 15,0 Gew.-%, vorzugsweise 1,0 - 10,0 Gew.- %, weiter vorzugsweise 2,0 - 8,0 Gew.-%, weiter vorzugsweise 3,0 - 7,0 Gew.- %, weiter vorzugsweise 4,0 - 6,0 Gew.- %, des Gleitmaterials (bezogen auf ein Gesamtgewicht des Gleitmaterials).

Das zweite vorteilhafte Gleitmaterial kann - als weiteren Füllstoff zusätzlich oder alternativ zu dem Calciumphosphat und dem mindestens einen Metallsulfid - außerdem einen Festschmierstoff, insbesondere ZnS, Ruß, oder hexagonales BN, vorzugsweise Graphit enthalten. Der Anteil an Festschmierstoffen am Gleitmaterial beträgt dabei vorzugsweise 5,0 - 15,0 Gew.-%, weiter vorzugsweise 5,0 - 10,0 Gew.-%, des Gleitmaterials.

Alternativ oder zusätzlich kann das zweite vorteilhafte Gleitmaterial außerdem BaSO₄ als weiteren Füllstoff umfassen, insbesondere wobei der Anteil an BaSO₄ 1,0 - 10,0 Gew.-%, vorzugsweise 1,0 - 5,0 Gew.-%, des Gleitmaterials beträgt.

Vorzugsweise beträgt der Anteil der Füllstoffe am zweiten vorteilhaften Gleitmaterial in Summe maximal 40,0 Gew.-%, insbesondere maximal 35,0 Gew.-%, maximal 30,0 Gew.-%, insbesondere maximal 25,0 Gew.-%, weiter insbesondere maximal 20,0 Gew.-%, weiter insbesondere maximal 15,0 Gew.-%.

Ein drittes vorteilhaftes Gleitmaterial gemäß der ersten Realisierungsform umfasst als Füllstoffe (Angaben jeweils bezogen auf ein Gesamtgewicht des Gleitmaterials):
- 8 bis 12 Gew.-%, vorzugsweise 10 Gew.-%, Polyethylen mit einer Molmasse von wenigstens 0,5 Millionen g/mol, insbesondere von wenigstens 1,5 Millionen g/mol, weiter insbesondere von wenigstens 2,0 Millionen g/mol;
- 8 bis 12 Gew.-%, vorzugsweise 10 Gew.-%, Calciumphosphat oder eine Mischung aus Calciumphosphat und wenigstens einem Metallsulfid, insbesondere SnS₂ und/oder WS₂, und
- 8 bis 12 Gew.-%, vorzugsweise 10 Gew.-%, Graphit;
- gegebenenfalls bis zu 5 Gew.-% Pigmente.

Bei einem solchen Gleitmaterial hat es sich als besonders vorteilhaft herausgestellt, wenn die Polyamid-Basis aus einer Mischung aus PA46 und wenigstens einem weiteren von PA46 verschiedenen Polyamid, insbesondere PA66 und/oder PA6, besteht. Insbesondere besteht die Polyamid-Basis aus einer Mischung aus PA6, PA66, und PA46, insbesondere mit einem Masseverhältnis PA6:PA66:PA46 von 8:5:1.

Ein viertes vorteilhaftes Gleitmaterial gemäß der ersten Realisierungsform umfasst als Füllstoffe (Angaben jeweils bezogen auf ein Gesamtgewicht des Gleitmaterials):
- 3 bis 7 Gew.-%, insbesondere 5 Gew.-%, Polyethylen mit einer Molmasse von wenigstens 0,5 Millionen g/mol, insbesondere von wenigstens 1,5 Millionen g/mol, weiter insbesondere von wenigstens 2,0 Millionen g/mol;
- 3 bis 7 Gew.-%, insbesondere 5 Gew.-%, Calciumphosphat oder Mischung aus Calciumphosphat und wenigstens einem Metallsulfid, insbesondere SnS₂ und/oder WS₂;
- 3 bis 7 Gew.-%, insbesondere 5 Gew.-%, BaSO₄;
- gegebenenfalls bis zu 5 Gew.-% Pigmente.

Bei einem solchen Gleitmaterial hat es sich als besonders vorteilhaft herausgestellt, wenn die Polyamid-Basis aus einer Mischung aus PA46 und wenigstens einem weiteren von PA46 verschiedenen Polyamid, insbesondere PA66 und/oder PA6, besteht. Insbesondere besteht die Polyamid-Basis aus einer Mischung aus PA6, PA66, und PA46, insbesondere mit einem Masseverhältnis PA6:PA66:PA46 von 4:2:11.

Ein fünftes, besonders vorteilhaftes Gleitmaterial gemäß der ersten Realisierungsform umfasst:
- 13 bis 17 Gew.-%, insbesondere 14 bis 16 Gew.-%, weiter insbesondere 14,5 bis 15,5 Gew.-% Polyethylen mit einer Molmasse von wenigstens 0,5 Millionen g/mol als Füllstoff, insbesondere von wenigstens 1,5 Millionen g/mol, weiter insbesondere von wenigstens 2,0 Millionen g/mol;
- 5 bis 7 Gew.-%, insbesondere 5,5 bis 6,5 Gew.-%, weiter insbesondere 6,25 Gew.-%, BaSO₄ als Füllstoff,
- 5 bis 7 Gew.-%, insbesondere 5,5 bis 6,5 Gew.-%, weiter insbesondere 6,25 Gew.-%, Mischung aus Calciumphosphat und wenigstens einem Metallsulfid, insbesondere SnS₂ und/oder WS₂, als Füllstoff;
- gegebenenfalls bis zu 5 Gew.-% Pigmente;
- Rest Polyamid-Basis, insbesondere wobei die Polyamid-Basis ein Gemisch aus PA6 und PA66 aufweist oder daraus besteht, weiter insbesondere wobei in der Polyamid-Basis das Massenverhältnis von PA6:PA66 zwischen 4:1 und 5:1, vorzugsweise von 4,8:1, beträgt. Insbesondere umfasst das Gleitmaterial 60 Gew.-% PA6 und 12,5 Gew.-% PA66. Die Füllstoffe sind insbesondere in der Polyamid-Basis dispergiert.

Gemäß einer zweiten vorteilhaften Realisierungsform kann die die Polymerbasis eine UHMW-PE-Basis sein. Die Polymerbasis kann insofern ultrahochmolekulares Polyethylen (auch als UHMW-PE oder PE-UHMW bezeichnet) umfassen oder daraus bestehen. Insofern kann es sich bei dem Gleitmaterial um ein Gleitmaterial auf UHMW-PE-Basis handeln. Dies bedeutet nicht zwingend, dass die gesamte Polymerbasis aus UHMW-PE bestehen muss. Vorzugsweise umfasst die Polymerbasis aber mindestens 80,0 Gew.-%, insbesondere mindestens 90,0 Gew.-%, weiter insbesondere mindestens 95,0 Gew.-% ultrahochmolekulares Polyethylen. Besonders vorteilhaft ist es, wenn die Polymerbasis (zu 100 %) aus ultrahochmolekularem Polyethylen besteht. Dies schließt nicht aus, dass die Polymerbasis unerwünschte Verunreinigungen aufweist, insbesondere bis zu 1,0 Gew.-%, vorzugsweise bis zu 0,5 Gew.-%, weiter vorzugsweise bis zu 0,2 Gew.-%.

Vorzugsweise weist das ultrahochmolekulare Polyethylen eine Molmasse von wenigstens 3,0 Millionen g/mol auf, insbesondere von wenigstens 4,0 Millionen g/mol, weiter insbesondere von wenigstens 4,5 Millionen g/mol auf. Insbesondere weist das ultrahochmolekulare Polyethylen eine Molmasse von maximal 10,0 Millionen g/mol, insbesondere von weniger als 7,0 Millionen g/mol auf.

Ein Gleitmaterial auf UHMW-PE-Basis hat sich als in der Herstellung vergleichsweise kostengünstig und einfach verarbeitbar herausgestellt (insbesondere gegenüber den bekannten Gleitmaterialien auf PTFE-Basis). Das vorgeschlagene Gleitmaterial auf UHMW-PE-Basis ist zudem insbesondere PFAS-frei (d.h. frei von per- und polyfluorierten Chemikalien), was eine umweltfreundliche Herstellung und Entsorgung begünstigt.

Als besonders vorteilhaft hat es sich herausgestellt, wenn das Gleitmaterial gemäß der zweiten Realisierungsform außerdem Calciumphosphat und/oder mindestens ein Metallsulfid, insbesondere SnS₂ und/oder WS₂, als Füllstoff umfasst. Das Gleitmaterial kann weitere Stoffe als Füllstoffe umfassen. Das Gleitmaterial kann auch aus der UHMW-PE-Basis und Calciumphosphat und/oder dem mindestens einen Metallsulfid bestehen. Es hat sich herausgestellt, dass durch die vorgeschlagene Kombination aus UHMW-PE und Calciumphosphat und/oder Metallsulfid die Reibungseigenschaften des Gleitmaterials auch bei fortschreitendem Verschleiß weitestgehend konstant bleiben. Ein weiterer Vorteil ergibt sich aus der Anwendbarkeit des Gleitmaterials sowohl im Trockenlauf als auch unter Öl- oder Fettschmierung. Auf diese Weise ist ein Einsatzbereich gegenüber nur geschmiert einsatzfähigen Gleitmaterialien, bspw. basierend auf PVDF und POM, erweitert.

Als besonders vorteilhaft erweist es sich, wenn der Anteil Calciumphosphat, der Anteil Metallsulfid oder der Anteil einer Mischung aus Calciumphosphat und Metallsulfid maximal 15,0 Gew.-%, vorzugsweise maximal 10,0 Gew.-%, weiter vorzugsweise maximal 7,0 Gew.-%, weiter vorzugsweise maximal 5,0 Gew.-%, des Gleitmaterials beträgt. Insbesondere kann der Anteil Calciumphosphat, der Anteil Metallsulfid oder der Anteil einer Mischung aus Calciumphosphat und Metallsulfid 1,0 - 15,0 Gew.-%, vorzugsweise 1,0 - 10,0 Gew.-%, weiter vorzugsweise 2,0 - 8,0 Gew.-%, weiter vorzugsweise 3,0 - 7,0 Gew.-%, weiter vorzugsweise 4,0 - 6,0 Gew.-%, des Gleitmaterials betragen (bezogen auf ein Gesamtgewicht des Gleitmaterials).

Es ist denkbar, dass das Gleitmaterial gemäß der zweiten Realisierungsform Calciumphosphat umfasst, aber kein Metallsulfid. Dann kann der Anteil Calciumphosphat insbesondere 1,0 - 15,0 Gew.-%, vorzugsweise 1,0 - 10,0 Gew.-%, weiter vorzugsweise 2,0 - 8,0 Gew.-%, weiter vorzugsweise 3,0 - 7,0 Gew.- %, weiter vorzugsweise 4,0 - 6,0 Gew.- %, des Gleitmaterials betragen. Es ist auch denkbar, dass das Gleitmaterial mindestens ein Metallsulfid umfasst, aber kein Calciumphosphat. Dann kann der Anteil Metallsulfid insbesondere 1,0 - 15,0 Gew.-%, vorzugsweise 1,0 - 10,0 Gew.-%, weiter vorzugsweise 2,0 - 8,0 Gew.-%, weiter vorzugsweise 3,0 - 7,0 Gew.- %, weiter vorzugsweise 4,0 - 6,0 Gew.- %, des Gleitmaterials betragen.

Vorzugweise umfassen die Füllstoffe eine Mischung aus Calciumphosphat und wenigstens einem Metallsulfid. Als besonders geeignet hat sich eine Mischung aus Calciumphosphat, WS₂ und SnS₂ herausgestellt. Insofern kann das Gleitmaterial eine Mischung aus Calciumphosphat, WS₂ und SnS₂ als Füllstoffe umfassen. Vorzugsweise beträgt ein Anteil dieser Mischung aus Calciumphosphat, WS₂ und SnS₂ maximal 15,0 Gew.-%, vorzugsweise maximal 10,0 Gew.-%, weiter vorzugsweise maximal 7,0 Gew.- %, weiter vorzugsweise maximal 5,0 Gew.-%. Insbesondere beträgt der Anteil dieser Mischung aus Calciumphosphat, WS₂ und SnS₂, 1,0 - 15,0 Gew.-%, vorzugsweise 1,0 - 10,0 Gew.-%, weiter vorzugsweise 2,0 - 8,0 Gew.-%, weiter vorzugsweise 3,0 - 7,0 Gew.- %, weiter vorzugsweise 4,0 - 6,0 Gew.- %, weiter vorzugsweise 4,5-5,5 Gew.-% des Gleitmaterials. Insbesondere kann es sich bei den Füllstoffen um eine Mischung aus Calciumphosphat, WS₂ und SnS₂ handeln. Insofern kann das Gleitmaterial aus der Polymerbasis und der eine Mischung aus Calciumphosphat, WS₂ und SnS₂ bestehen.

Als bevorzugt (sowohl betreffend das Gleitmaterial gemäß der ersten Realisierungsform als auch das Gleitmaterial gemäß der zweiten Realisierungsform) hat sich eine Mischung aus Calciumphosphat und wenigstens einem Metallsulfid folgender Zusammensetzung erwiesen:
70,0 - 97,0 Gew.-% Calciumphosphat,
2,0 - 20,0 Gew.-% SnS₂,
1,0 - 10,0 Gew.-% WS₂.

Die Summe der Anteile ergibt dabei 100 Gew.-% (die Prozentangaben beziehen sich insofern auf die Summe der Gewichte der drei Komponenten). Derartige Füllstoffzusammensetzungen bieten besonders gute tribologische Eigenschaften, die insbesondere die Verschleißeigenschaften verbessern.

Als besonders bevorzugt (sowohl betreffend das Gleitmaterial gemäß der ersten Realisierungsform als auch das Gleitmaterial gemäß der zweiten Realisierungsform) hat sich eine Mischung aus Calciumphosphat und wenigstens einem Metallsulfid folgender Zusammensetzung herausgestellt:
88,0 Gew.-% Calciumphosphat,
8,5 Gew.-% SnS₂,
3,5 Gew.-% WS₂.

Im Rahmen einer besonders vorteilhaften Ausgestaltung des Gleitmaterials gemäß der zweiten Realisierungsform umfasst das Gleitmaterial (Angaben jeweils bezogen auf ein Gesamtgewicht des Gleitmaterials):
- 4,0-6,0 Gew.-%, vorzugsweise 4,5-5,5 Gew.-%, weiter vorzugsweise 5,0 Gew.-%, einer Mischung aus Calciumphosphat, WS₂ und SnS₂ (vorzugsweise mit der Zusammensetzung 88,0 Gew.-% Calciumphosphat / 8,5 Gew.-% SnS₂ / 3,5 Gew.-% WS₂) als Füllstoff;
- gegebenenfalls bis zu 5 Gew.-% Pigmente;Rest ultrahochmolekulares Polyethyhlen.

Bei manchen Ausgestaltungen des Gleitmaterials gemäß der zweiten Realisierungsform können die Füllstoffe außerdem BaSO₄ umfassen. BaSO₄ dient insbesondere als Festschmierstoff. Vorzugweise beträgt der Anteil an BaSO₄ maximal 10,0 Gew.-%, weiter vorzugweise maximal 5,0 Gew.-%, weiter vorzugweise 1,0 - 10,0 Gew.-%, weiter vorzugsweise 1,0 - 5,0 Gew.-%, des Gleitmaterials.

Im Rahmen einer weiteren besonders vorteilhaften Ausgestaltung kann das Gleitmaterial gemäß der zweiten Realisierungsform zu 94,0 Gew.-% aus ultrahochmolekularem Polyethyhlen, zu 3,0 Gew.-% aus einer Mischung aus Calciumphosphat und mindestens einem Metallsulfid (insbesondere zu 3,0 Gew.-% aus einer Mischung aus Calciumphosphat, WS₂ und SnS₂, vorzugweise mit der Zusammensetzung 88,0 Gew.-% Calciumphosphat / 8,5 Gew.-% SnS₂ / 3,5 Gew.-% WS₂) und zu 3,0 Gew.-% aus BaSO₄ bestehen.

Bei manchen Ausgestaltungen des Gleitmaterials gemäß der zweiten Realisierungsform können die Füllstoffe wenigstens einen weiteren anorganischen Füllstoff, insbesondere Bornitrid, umfassen. Als vorteilhaft hat sich ein Anteil des weiteren anorganischen Füllstoffs, oder der weiteren anorganischen Füllstoffe in Summe, von 0,5 - 3,0 Gew.-%, insbesondere 0,5 - 1,5 Gew.-%, des Gleitmaterials erwiesen.

Zusätzlich oder alternativ können die Füllstoffe des Gleitmaterials gemäß der zweiten Realisierungsform einen oder mehrere weitere Funktionsstoffe umfassen. Der wenigstens eine weitere Funktionsstoff kann insbesondere aus der folgenden Gruppe an Funktionsstoffen ausgewählt sein:
- Verstärkungsstoffen, wie insbesondere Kohlenstofffasern, Glasfasern, Polymerfasern (insbesondere Aramidfasern);
- Festschmierstoffen, wie insbesondere ZnS, Graphit, Ruß, oder hexagonales BN;
- Kunststoffpartikel, wie insbesondere Aramid (PPTA)-, PPSO2-, PI- und PAI-Partikel, Polyacrylatpartikel (PAR), PBA-Partikel, PBI-Partikel;
- Metalloxiden, wie insbesondere Fe₂O₃, Al₂O₃, SiO₂, CrO₂, TiO₂, CuO, MgO, ZnO;
- Hartstoffpartikeln, insbesondere keramische Partikel, wie SiC, Si3N4, BC, cubisches BN;
- Fluoriden, wie insbesondere CaF₂, NaF, AlF₃;
- Schichtsilikaten, wie insbesondere Kaolin, Glimmer, Wollastonit, Talk, Kieselsäure;
- metallischen Feinpulvern, wie insbesondere Bronze und Wismut; und
- Pigmenten oder Mischphasenoxidpigmenten, wie insbesondere Co-Al, Cr-Sb-Ti, Co-Ti, Fe-Al oder Co-Cr.

In diesem Zusammenhang kann es sich als vorteilhaft erweisen, wenn der Anteil des weiteren Funktionsstoffs, bzw. der Anteil der mehreren weiteren Funktionsstoffe in Summe, maximal 5 Gew.-% des Gleitmaterials beträgt.

Vorzugweise beträgt ein Anteil der Füllstoffe am Gleitmaterial gemäß der zweiten Realisierungsform insgesamt (also in Summe) maximal 25,0 Gew.-%, insbesondere maximal 20,0 Gew.-%, weiter insbesondere maximal 15,0 Gew.-%, weiter insbesondere maximal 10,0 Gew.-%, weiter insbesondere maximal 7,0 Gew.-% des Gleitmaterials. Insbesondere beträgt ein Anteil der Füllstoffe 1,0 - 25,0 Gew.- %, insbesondere 1,0 - 20,0 Gew.-%, weiter insbesondere 5,0 - 15,0 Gew.-%, weiter insbesondere 3,0 - 7,0 Gew.-%, weiter insbesondere 5,0 Gew.-%, 7,0 Gew.-% oder 10,0 Gew.-% des Gleitmaterials. Insofern kann der Anteil der Polymerbasis insbesondere 75,0 - 99,0 Gew.-%, weiter insbesondere 80,0 - 99,0 Gew.-%, weiter insbesondere 85,0 - 95,0 Gew.-%, weiter insbesondere 93,0 - 97,0 Gew.-%, weiter insbesondere 90,0 Gew.-%, 93,0 Gew.-% oder 95,0 Gew.-%, des Gleitmaterials betragen.

Die Erfindung wird im Folgenden anhand von Beispielen und anhand der Figuren näher erläutert. In der Zeichnung zeigen:
- Figur 1:: eine schematische Darstellung einer beispielhaften Ausgestaltung eines Gleitlagerverbundwerkstoffs in einer Schnittansicht;
- Figur 2:: eine schematische Darstellung des Gleitlagerverbundwerkstoff gemäß Figur 1 in einer Draufsicht auf die Gleitoberfläche;
- Figur 3:: Flussdiagramm zur Erläuterung einer beispielhaften Ausgestaltung eines Verfahrens zum Herstellen des Gleitlagerverbundwerkstoffs gemäß Figur 1;
- Figur 4: eine schematische Darstellung zur Erläuterung der Bestimmung eines Schälwiderstands; und
- Figur 5:: Diagramm zur Erläuterung eines Schälwiderstands verschiedener Proben aus einem Gleitlagerverbundwerkstoff.

In der nachfolgenden Beschreibung sowie in den Figuren sind für identische oder einander entsprechende Merkmale jeweils dieselben Bezugszeichen verwendet.

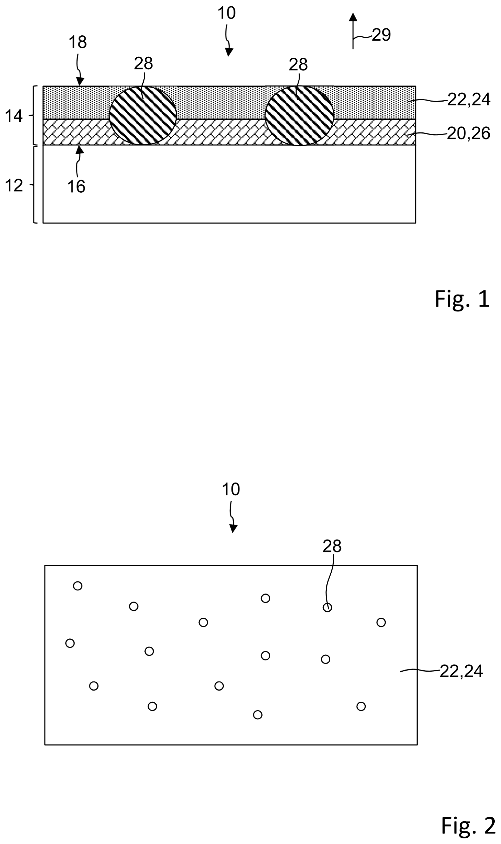

Die Figur 1 zeigt eine schematische Schnittansicht einer Ausgestaltung eines Gleitlagerverbundwerkstoffs, welcher insgesamt mit dem Bezugszeichen 10 bezeichnet ist.

Der Gleitlagerverbundwerkstoff 10 umfasst eine metallische Stützschicht 12 (auch als Substrat oder Träger bezeichnet) und eine auf die Stützschicht aufgebrachte Gleitschicht 14.

Die Stützschicht 12 kann insbesondere ein Stahlrücken sein, bspw. aus einem geschliffenen Stahl.

Die Gleitschicht 14 weist eine Verbindungsfläche 16 auf, über welche die Gleitschicht 14 mit der Stützschicht verbunden ist. Die Gleitschicht 14 weist an einer der Verbindungsfläche 16 gegenüberliegenden Seite (also an einer der Stützschicht 12 abgewandten Seite) eine Gleitoberfläche 18 auf.

Die Gleitschicht 14 umfasst im Beispiel zwei Teilschichten: eine unmittelbar auf die Stützschicht 12 aufgebrachte Klebeschicht 20 und eine unmittelbar auf die Klebeschicht 20 aufgebrachte und über die Klebeschicht 20 mit der Stützschicht 20 verbundene Gleitmaterialschicht 22 aus einem Gleitmaterial 24.

Wie aus Figur 1 ersichtlich, bildet die Klebeschicht 20 abschnittsweise die Verbindungsfläche 16 und die Gleitmaterialschicht 22 bildet abschnittsweise die Gleitoberfläche 18.

Die Klebeschicht 20 weist einen ausgehärteten Epoxidharz-Klebstoff 26 auf oder besteht daraus. Vorzugsweise weist der Epoxidharz-Klebstoff 26 eine Bruchdehnung von über 10% und ein E-Modul von weniger als 2000 MPa auf.

Das Gleitmaterial 24 ist auf Polymerbasis ausgebildet, insbesondere auf Polyamid-Basis oder eine UHMW-PE-Basis (siehe oben). Wie vorstehend erwähnt, kann das Gleitmaterial 24 optional Füllstoffe (nicht gesondert dargestellt) zur Verbesserung der tribologischen Eigenschaften aufweisen, insbesondere Festschmierstoffe und/oder Hartpartikel. Die Füllstoffe sind dann insbesondere in der matrixbildenden Polymerbasis dispergiert.

Wie aus Figur 1 ersichtlich, weist die Gleitschicht 14 außerdem elektrisch leitfähige Partikel 28, vorzugsweise Metallpartikel, auf. Die elektrisch leitfähigen Partikel 28 erstrecken sich durch die Klebeschicht 20 und die Gleitmaterialschicht 22 in einer Richtung 29 orthogonal zu einer Schichterstreckung, sodass die elektrisch leitfähigen Partikel 28 einerseits die Stützschicht 12 kontaktieren (also abschnittsweise die Verbindungsfläche 16 bilden) und andererseits abschnittsweise die Gleitoberfläche 18 bilden (vgl. auch Fig. 2).

Die elektrisch leitfähigen Partikel 28 stellen insofern eine elektrische Verbindung in einer Richtung 29 orthogonal zur Schichterstreckung zwischen Stützschicht 12 und Gleitoberfläche 18 bereit.

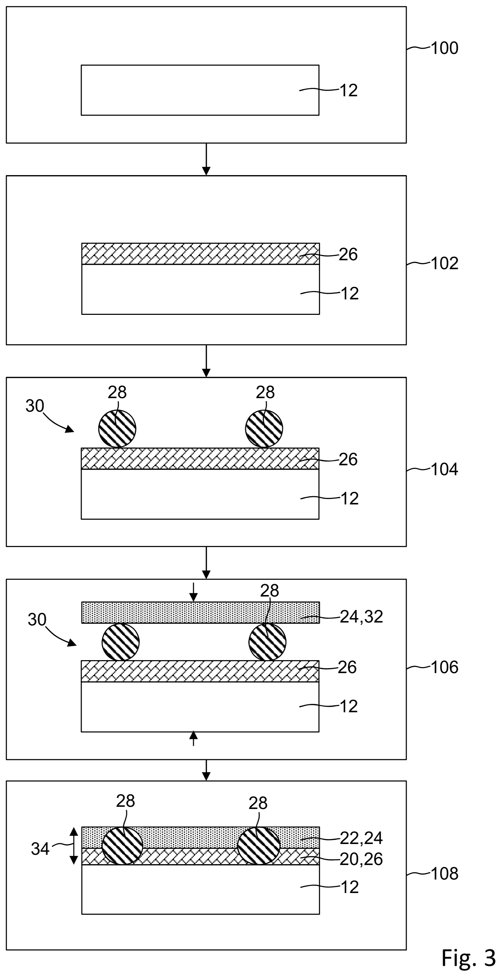

Die Figur 3 zeigt ein beispielhaftes Verfahren zum Herstellen eines solchen Gleitlagerverbundwerkstoffs 10.

Gemäß dem Verfahren wird zunächst die Stützschicht 12 bereitgestellt (vgl. Block 100 in Fig. 3). Die Stützschicht 12 kann insbesondere ein Abschnitt eines Flachmaterialbandes, insbesondere Stahlbandes, sein.

In einem weiteren Schritt (vgl. Block 102 in Fig. 3) wird sodann eine Schicht aus einem, vorzugsweise wärmeaushärtbaren, Epoxidharz-Klebstoff 26 auf die Stützschicht 12 aufgetragen.

In einem weiteren Schritt (vgl. Block 104 in Fig. 3) werden sodann die elektrisch leitfähigen Partikel 28 auf die Schicht aus Epoxidharz-Klebstoff 26 aufgetragen, beispielsweise aufgestreut. Insofern wird eine Zwischenschicht 30 umfassend Epoxidharz-Klebstoff 26 und elektrisch leitfähige Partikel 28 auf der Stützschicht 12 aufgetragen.

Es ist möglich, dass die elektrisch leitfähigen Partikel 28 aufgrund der Schwerkraft bereits zumindest teilweise in die Schicht aus Epoxidharz-Klebstoff 26 einsinken.

Bei nicht dargestellten Ausgestaltungen können die elektrisch leitfähigen Partikel 28 auch vorher mit dem Epoxidharz-Klebstoff 26 zu einer Klebstoffzusammensetzung vermischt werden und dann eine Schicht aus der Klebstoffzusammensetzung (umfassend Epoxidharz-Klebstoff und elektrisch leitfähige Partikel) auf die Stützschicht 12 aufgetragen werden. Die Schicht aus der Klebstoffzusammensetzung bildet dann die Zwischenschicht 30.

In einem weiteren Schritt (vgl. Block 106 in Fig. 3) wird sodann eine Schicht aus dem Gleitmaterial 24 auf die Schicht aus Epoxidharz-Klebstoff 26 und die elektrisch leitfähigen Partikel 28 aufgetragen. Vorzugsweise ist das Gleitmaterial 24 als Gleitmaterial-Folie 32 bereitgestellt. Dann kann die Gleitmaterial-Folie 32 insbesondere auf die Schicht aus Epoxidharz-Klebstoff 26 aufgelegt werden.

In einem weiteren Schritt wird sodann die Anordnung aus Stützschicht 12, Zwischenschicht 30 und Gleitmaterial-Folie 32 in einer Presseinrichtung, bspw. Walze oder Heißpresse, verpresst (in Block 106 in Fig. 3 durch die beiden Pfeile angedeutet), insbesondere unter zumindest teilweiser Aushärtung des Epoxidharz-Klebstoffs 26.

Wie in Fig. 3, Block 108 dargestellt, erfolgt das Verpressen derart, dass die elektrisch leitfähigen Partikel 28 in den Epoxidharz-Klebstoff 26 und die Gleitmaterial-Folie 32 eingedrückt werden, sodass zumindest ein Anteil der Partikel 28 einerseits in Kontakt mit der Stützschicht 12 ist und andererseits die Gleitmaterial-Folie 32 durchstößt und somit abschnittsweise die Gleitoberfläche 28 bildet.

Das Verpressen erfolgt insbesondere derart, dass die die spätere Gleitschicht 14 bildende Anordnung aus Gleitmaterial-Folie 32 auf Zwischenschicht 30 auf eine Zielschichtdicke 34 komprimiert werden. Insbesondere kann der Epoxidharz-Klebstoff 26 beim Verpressen zumindest teilweise seitlich herauslaufen. Die ursprünglich aufgetragene Schicht aus Epoxidharz-Klebstoff kann also insbesondere größer als die finale Klebeschicht 20 sein. Die Stützschicht 12 wird bei dem Verpressen insbesondere nicht oder nicht signifikant komprimiert.

Wie vorstehend erwähnt, ist es vorteilhaft, wenn zumindest ein Anteil der nicht metallischen Partikel 28 vor dem Verpressen größer als die Zielschichtdicke 34 der Gleitschicht 14 ist. Insbesondere werden die elektrische leitfähigen Partikel 28 beim Verpressen zumindest leicht plastisch verformt (in Fig. 3 angedeutet).

Das Verpressen kann beispielsweise mittels einer Walzvorrichtung oder einer Heißpresse erfolgen. Die Zielschichtdicke 34 kann dann insbesondere durch einen Walzspalt oder Pressspalt definiert sein.

Vorzugsweise erfolgt das Verpressen unter Temperatureinwirkung zwischen 200 und 220 °C.

### Vergleich Schälwiderstand

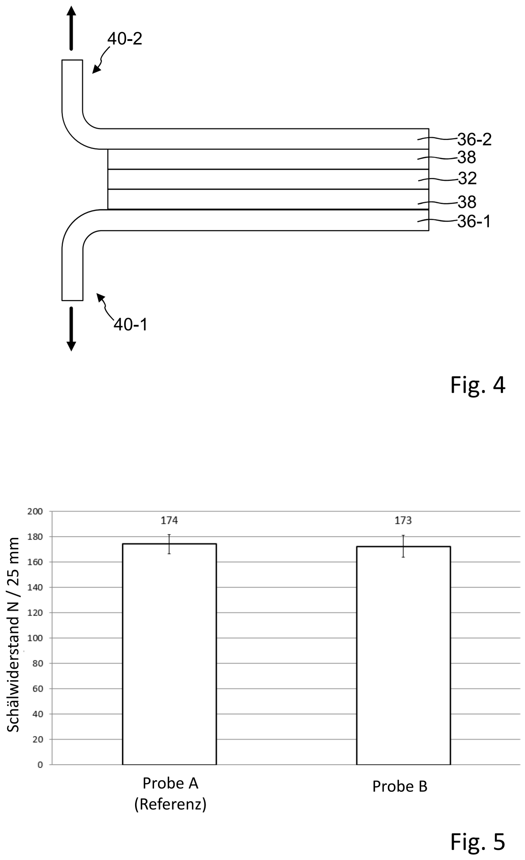

Der Schälwiderstand zwischen Stützschicht 12 und Gleitschicht 14 wurde mittels eines T-Peel-Tests anhand von Sandwichlaminaten ermittelt. Zu diesem Zweck wurden Proben mit einem Fünfschichtaufbau hergestellt, wobei die zentrale Schicht durch die Gleitmaterial-Folie 32 gebildet ist, die beidseits mit einem (der Stützschicht 12 entsprechenden) Substrat 36 mittels einer Klebstoffzusammensetzung 38 verklebt wurde (vgl. Fig. 4).

### Herstellung der Proben:

Im Konkreten wurden zwei metallische Substrate 36-1, 36-2 mit Abmessung 100 mm x 120 mm mit einer Klebstoffzusammensetzung 38 bestrichen, wobei bei jedem Substrat 36-1, 36-2 ein 20 mm breiter Endabschnitt 40-1, 40-2 freigelassen wurde, sodass eine 100 mm x 100 mm große Klebefläche entsteht. Auf die Klebefläche des ersten Substrats 36-1 wurde ein Zuschnitt der Gleitmaterial-Folie 32 mit Abmessung 100 mm x 100 mm aufgelegt. Auf die Gleitmaterial-Folie 32 wurde dann das zweite mit der Klebstoffzusammensetzung 38 bestrichene Substrat 36-2 derart (mit der Klebstoff-Seite) auf die Gleitmaterial-Folie 32 aufgelegt, dass sich die (Klebstoff-freien) Endabschnitte 40-1, 40-2 der beiden Substrate 36-1, 36-2 überlappen (vgl. Fig. 4).

Dieser Fünfschichtaufbau wurde sodann in einer Heißpresse bei 210 °C für 150 s verpresst. Im Anschluss wurden aus dem Verbund 3 Proben mit einer Breite von jeweils 25 mm herausgeschnitten.

### Durchführung des T-Peel-Tests:

Die nicht verklebten Endabschnitte 40-1, 40-2 der Proben wurden um 90° nach außen gebogen (siehe Fig. 4), in eine Zugprüfmaschine eingespannt und mit einer Ziehgeschwindigkeit von 300 mm/min auseinandergezogen. Die hierzu erforderliche Kraft wurde gemessen, für jede Probe über einen Wegbereich von 50 mm - 150 mm gemittelt und über jeweils 3 Proben ein Durchschnitt gebildet. Der Schälwiderstand wurde sodann als Quotient aus der so gemittelten Kraft und der Klebebreite von 25 mm berechnet.

Im Konkreten wurden folgende Proben untersucht:

| Probe | Substrat | Klebstoffzusammensetzung | Gleitmaterial-Folie |
|---|---|---|---|
| A (Referenz) | Stahl, geschliffen, 0,3 mm | SikaPower-533 MBX | 80 Gew.-% PA6 + 20 Gew-% UHMW-PE als Füllstoff |
| | | Dicke 80 µm je Seite | |
| | | | Dicke: 100 µm |
| B | Stahl, geschliffen, 0,3 mm | SikaPower-533 MBX + 5 Gew.-% Rogal Zinnbronze GK180/250 | 80 Gew.-% PA6 + 20 Gew-% UHMW-PE als Füllstoff |
| | | Dicke 80 µm je Seite | Dicke: 100 µm |

Bei der Referenzprobe A bestand die Klebstoffzusammensetzung aus dem Epoxidharz-Klebstoff SikaPower^{®}-533 MBX der Sika AG, Zugerstrasse 50, CH-6340 Baar, Schweiz.

Bei der Probe B bestand die Klebstoffzusammensetzung zu 95 Gew.-% aus dem Epoxidharz-Klebstoff SikaPower^{®}-533 MBX der Sika AG, Zugerstrasse 50, CH-6340 Baar, Schweiz und zu 5 Gew.-% (entsprechend 0,7 Vol.-%) aus elektrisch leitfähigen Partikeln 28. Im Konkreten wurde als elektrisch leitfähige Partikel 28 ein kommerziell erhältliches Bronzepulver (Rogal Zinnbronze GK180/250 der Firma Schlenk Metallic Pigments GmbH, Barnsdorfer Hauptstraße 2, 91154 Roth; Partikelgröße d50 = 200 µm) verwendet. Hierzu wurde die entsprechende Menge Bronzepulver (Rogal Zinnbronze GK180/250) mit dem Epoxidharz-Klebstoff SikaPower-533 MBX vor Auftragung homogen vermischt.

Wie die in Figur 5 dargestellten Ergebnisse der Schältests zeigen, weist die Probe B mit elektrisch leitfähigen Partikeln 28 vergleichbare Schälwiderstände wie die Vergleichsprobe A ohne elektrisch leitfähige Partikel 28 auf.

### Vergleich elektrischer Widerstand

Um eine elektrische Leitfähigkeit zu charakterisieren, wurden verschiedene Proben hergestellt und ein elektrischer Widerstand gemessen. Konkret wurden Proben mit einem Dreischichtaufbau hergestellt, wobei ein metallisches Substrat mit Abmessung 100 mm x 100 mm mit der entsprechenden Klebstoffzusammensetzung bestrichen wurde und sodann auf die Klebstoffzusammensetzung ein Zuschnitt der Gleitmaterial-Folie 32 mit Abmessung 100 mm x 100 mm aufgelegt wurde. Dieser Dreischichtaufbau wurde sodann in einer Heißpresse bei 210 °C für 150 s bei einem Druck von 4 MPa verpresst.

Im Konkreten wurden folgende Proben untersucht:

| Probe | Substrat | Klebstoffzusammensetzung | Gleitmaterial-Folie |
|---|---|---|---|
| C (Vergleich) | Stahl, geschliffen, 0,3 | SikaPower-533 MBX | 80 Gew.-% PA6 + 20 Gew-% UHMW-PE als Füllstoff |
| | mm | Schichtdicke: 80 µm | |
| | | | Dicke: 100 µm |
| D | Stahl, geschliffen, 0,3 mm | SikaPower-533 MBX + 0,5 Gew.-% (0,07 Vol.%) Rogal Zinnbronze GK180/250 | 80 Gew.-% PA6 + 20 Gew-% UHMW-PE als Füllstoff |
| | | Schichtdicke: 80 µm | Dicke: 100 µm |
| E | Stahl, geschliffen, 0,3 mm | SikaPower-533 MBX + 5 Gew.-% (0,7 Vol.-%) Rogal Zinnbronze GK180/250 | 80 Gew.-% PA6 + 20 Gew-% UHMW-PE als Füllstoff |
| | | Schichtdicke: 80 µm | Dicke: 100 µm |
| F (Vergleich) | Stahl, geschliffen, 0,3 mm | SikaPower-533 MBX + 5-Gew.-% Kohlenstoff-Faser (Kreca Chop 101 S) | 82% UHMW-PE, 15% Ruß, 3% Graphit |
| | | Schichtdicke: 80 µm | Dicke: 200 µm |

Sodann wurde der Flächendurchgangswiderstand der Proben mittels eines Multimeters über jeweils einen ober- und unterseitigen 1 cm² Kupferkontakt gemessen. Die Ergebnisse der Messungen sind in nachfolgender Tabelle zusammengefasst:

| Probe | Flächendurchgangswiderstand (Ω*cm²) |
|---|---|
| C (Vergleich) | > 10⁹ |
| D | 0,4 |
| E | 0,3 |
| F (Vergleich) | 43 |

Wie bei einem Vergleich der Proben D und E mit leitfähigen Partikeln 28 und der Referenzprobe C ohne leitfähige Partikel 28 ersichtlich, ist selbst bei vergleichsweise geringem Volumenanteil an leitfähigen Partikeln 28 ein Flächendurchgangswiderstand signifikant erniedrigt. Auch gegenüber der Vergleichsprobe F mit einem leitfähigen Gleitmaterial und einer durch Kohlenstofffasern leitfähigen Klebeschicht konnte ein verringerter Flächendurchgangswiderstand erzielt werden.

## Patentansprüche

1. Gleitlagerverbundwerkstoff (10) umfassend:
- eine, insbesondere metallische, Stützschicht (12),
- eine auf die Stützschicht aufgebrachte Gleitschicht (14) mit einer Verbindungsfläche (16) zur Stützschicht (12) und einer gegenüberliegenden Gleitoberfläche (18),
die Gleitschicht (14) umfassend:
∘ eine Gleitmaterialschicht (22) aus einem, insbesondere elektrisch nicht leitfähigen, Gleitmaterial (24) auf Polymerbasis, wobei die Gleitmaterialschicht (22) abschnittsweise die Gleitoberfläche (18) bildet;
∘ eine zwischen Gleitmaterialschicht (22) und Stützschicht (12) angeordnete Klebeschicht (20), umfassend einen Epoxidharz-Klebstoff (26), wobei die Klebschicht (20) abschnittsweise die Verbindungsfläche (16) bildet;
∘ elektrisch leitfähige Partikel (28), welche die Gleitmaterialschicht (22) und die Klebeschicht (20) durchsetzen, sodass die elektrisch leitfähigen Partikel (28) abschnittsweise die Verbindungsfläche (16) und abschnittsweise die Gleitoberfläche (18) bilden.

2. Gleitlagerverbundwerkstoff (10) nach Anspruch 1, wobei eine mittlere Partikeldichte der elektrisch leitfähigen Partikel (28) an der Gleitoberfläche (18) 1- 100, vorzugsweise 1-50, weiter vorzugsweise 2-30, Partikel pro 100 mm² beträgt.

3. Gleitlagerverbundwerkstoff (10) nach Anspruch 1 oder 2, wobei ein Volumenanteil der elektrisch leitfähigen Partikel (28) bezogen auf ein Gesamtvolumen der Gleitschicht (14) 0,01 - 1,0 Vol.-%, vorzugsweise 0,02 - 0,5 Vol.-%, weiter vorzugsweise 0,03-0,2 Vol.-%, beträgt.

4. Gleitlagerverbundwerkstoff (10) nach einem der vorherigen Ansprüche, wobei der Epoxidharz-Klebstoff (26) eine Bruchdehnung von mehr als 10% und weniger als 60%, insbesondere von mehr als 15% und weniger als 50%, und ein Elastizitätsmodul von weniger als 2000 MPa und mehr als 200 MPa, insbesondere von weniger als 1500 MPa und mehr als 400 MPa, weiter insbesondere von weniger als 1000 MPa und mehr als 500 MPa, aufweist.

5. Gleitlagerverbundwerkstoff (10) nach einem der vorherigen Ansprüche, wobei die Polymerbasis des Gleitmaterials (24) eine Polyamid-Basis ist, wobei das Polyamid ausgewählt ist aus der Gruppe bestehend aus PA46, PA6, PA66, PA610, PA612, PA12 und Kombinationen hiervon,
wobei das Gleitmaterial (24) Polyethylen mit einer Molmasse von wenigstens 0,5 Millionen g/mol, insbesondere von wenigstens 1,0 Millionen g/mol, weiter insbesondere von wenigstens 1,5 Millionen g/mol, weiter insbesondere von wenigstens 2,0 Millionen g/mol, als Füllstoff aufweist,
wobei der Anteil des Polyethylens am Gleitmaterial (24) 2 bis 25 Gew.-%, insbesondere 15 bis 25 Gew.-%, weiter insbesondere 18 bis 22 Gew.-%, beträgt.

6. Gleitlagerverbundwerkstoff (10) nach einem der Ansprüche 1 bis 4, wobei die Polymerbasis des Gleitmaterials (24) eine UHMW-PE-Basis umfassend ultrahochmolekulares Polyethylen mit einer Molmasse von wenigstens 3,0 Millionen g/mol, insbesondere von wenigstens 4,0 Millionen g/mol, weiter insbesondere von wenigstens 4,5 Millionen g/mol, und maximal 10,0 Millionen g/mol, ist.

7. Gleitlagerverbundwerkstoff (10) nach dem vorherigen Anspruch, wobei das Gleitmaterial (24) außerdem eine Mischung aus Calciumphosphat, WS₂ und SnS₂ als Füllstoff umfasst, wobei der Anteil dieser Mischung am Gleitmaterial (24) maximal 15,0 Gew.-%, vorzugsweise maximal 10,0 Gew.-%, weiter vorzugsweise maximal 7,0 Gew.-%, weiter vorzugsweise maximal 5,0 Gew.-%, des Gleitmaterials beträgt.

8. Verfahren zum Herstellen eines Gleitlagerverbundwerkstoffs (10), insbesondere nach einem der Ansprüche 1 bis 7, umfassend:
- Bereitstellen:
▪ einer, insbesondere metallischen, Stützschicht (12);
▪ einer Gleitmaterial-Folie (32) aus einem Gleitmaterial (24) auf Polymerbasis;
▪ eines aushärtbaren, insbesondere wärmeaushärtbaren, Epoxidharz-Klebstoffes (26);
▪ von elektrisch leitfähigen Partikeln (28);
- Aufbringen einer Zwischenschicht umfassend Epoxidharz-Klebstoff (26) und elektrisch leitfähige Partikel (28) auf die Stützschicht (12) und/oder auf die Gleitmaterial-Folie (32);
- Anordnen der Gleitmaterial-Folie (32) auf der Stützschicht (12) derart, dass die Zwischenschicht zwischen der Stützschicht (12) und der Gleitmaterial-Folie (32) angeordnet ist;
- Verpressen der Anordnung aus Gleitmaterial-Folie (32), Zwischenschicht (30) und Stützschicht (12) derart, insbesondere unter Wärmezufuhr, dass sich die elektrisch leitfähigen Partikel (28) in die Gleitmaterial-Folie (32) und den Epoxidharz-Klebstoff (26) eindrücken, sodass zumindest ein Anteil der elektrisch leitfähigen Partikel (28) den Epoxidharz-Klebstoff (26) und die Gleitmaterial-Folie (32) durchsetzt.

9. Verfahren nach dem vorherigen Anspruch,
wobei das Aufbringen der Zwischenschicht (30) umfasst:
- Aufbringen einer Schicht aus dem Epoxidharz-Klebstoff (26) auf die Stützschicht (12) und/oder auf die Gleitmaterial-Folie (32); und
- Aufbringen, insbesondere Aufstreuen, von elektrisch leitfähigen Partikeln (28) auf den Epoxidharz-Klebstoff (26),
oder
wobei das Aufbringen der Zwischenschicht (30) umfasst:
- Bereitstellen einer Klebstoffzusammensetzung umfassend Epoxidharz-Klebstoff (26) und darin dispergierte elektrisch leitfähige Partikel (28); und
- Aufbringen einer Schicht aus der Klebstoffzusammensetzung auf die Stützschicht (12) und/oder auf die Gleitmaterial-Folie (32).

10. Verfahren nach einem der Ansprüche 8 oder 9, wobei das Verpressen bei einer Temperatur zwischen 190°C und 230°C, vorzugsweise zwischen 200°C und 220°C, erfolgt.

11. Verfahren nach einem der Ansprüche 8 bis 10, wobei das Verpressen derart erfolgt, dass zumindest ein Anteil der elektrisch leitfähigen Partikel (28) plastisch verformt wird.

12. Verfahren nach einem der Ansprüche 8 bis 11, wobei das Verpressen das Komprimieren der Gleitmaterial-Folie (32) und der Zwischenschicht (30) auf eine Zielschichtdicke (34) umfasst, wobei die elektrisch leitfähigen Partikel (28) vor dem Verpressen eine Größenverteilung derart aufweisen, dass maximal 20 Gew.-% der elektrisch leitfähigen Partikel (28) kleiner als die Zielschichtdicke (34) sind und maximal 10 Gew.-% der elektrisch leitfähigen Partikel (28) größer als 130% der Zielschichtdicke sind.

13. Verfahren nach einem der Ansprüche 8 bis 12 oder Gleitlagerverbundwerkstoff (10) nach einem der Ansprüche 1 bis 7, wobei die elektrisch leitfähigen Partikel (28) aus einem Material, insbesondere Metall oder Metalllegierung, mit einer Fließgrenze R_{P0,2} von 120 - 240 MPa, vorzugsweise von 140 - 200 MPa hergestellt sind.

14. Verfahren nach einem der Ansprüche 8 bis 13 oder Gleitlagerverbundwerkstoff (10) nach einem der Ansprüche 1 bis 7, wobei die elektrisch leitfähigen Partikel (28) eine Oberflächenhärte von 70 - 150 HV 0,05, vorzugsweise 80 -140 HV 0,05, aufweisen.

15. Gleitlagerelement, hergestellt aus einem Gleitlagerverbundwerkstoff (10) nach einem der Ansprüche 1 bis 7, 13 oder 14, insbesondere aus einem Gleitlagerverbundwerkstoff (10) hergestellt nach einem Verfahren nach einem der Ansprüche 8 bis 14.
